# FASCICULE DE BREVET EUROPEEN

(11) **EP 0 753 946 B1**
(45) Date de publication et mention de la délivrance du brevet: **21.04.2004**
(21) Numéro de dépôt: 96401506.9
(22) Date de dépôt: 09.07.1996
(51) Int. Cl.: H04J 14/02

(54) **Réseau de transmission optique avec multiplexage de longueurs d'onde**
Optisches Übertragungsnetzwerk mit Wellenlängenmultiplex
Optical transmission system with wavelength multiplexing

(30) Priorité: 12.07.1995 FR 9508437
(43) Date de publication de la demande: 15.01.1997
(73) Titulaire: ALCATEL, 75008 Paris (FR)
(72) Inventeur: Sotom, Michel, 75015 Paris (FR); Masetti, Francesco, 75015 Paris (FR); De Bouard, Dominique, 91700 Ste Geneviève des Bois (FR); Gabriagues, Jean-Michel, 92600 Asnières (FR); Chiaroni, Dominique, 92160 Antony (FR)
(74) Mandataire: Fournier, Michel Robert Marie

(56) Documents cités:
- EP-A- 0 497 667
- EP-A- 0 544 216
- EP-A- 0 621 700
- PATENT ABSTRACTS OF JAPAN vol. 013, no. 097 (E-723), 7 Mars 1989 & JP-A-63 272132 (NIPPON TELEGR & TELEPH CORP), 9 Novembre 1988,

## Description

L'invention se situe dans le domaine des transmissions d'informations utilisant des liaisons optiques pour véhiculer des signaux multiplexés en longueurs d'onde. Elle concerne plus particulièrement une architecture de réseaux particulièrement adaptée à des dimensions géographiques relativement limitées, telles que les réseaux locaux. L'invention concerne également une matrice de commutation utilisable dans un contrôleur adapté à un tel réseau.

L'invention a pour but de concevoir un réseau qui soit capable de supporter des trafics uniformes ou sporadiques et des débits pouvant atteindre quelques gigabits par seconde et qui ne nécessite pas de protocole complexe d'établissement de connexions.

D'une façon générale, un réseau est constitué d'une pluralité de stations susceptibles d'émettre et de recevoir des messages à destination et en provenance d'autres stations du réseau. Ces échanges d'informations s'effectuent au moyen d'une liaison de transmission à laquelle sont connectés des noeuds de communication associés aux stations. Dans le cas des liaisons optiques utilisant par exemple des fibres optiques, on exploite leur large bande passante en procédant à un multiplexage de longueurs d'onde. On peut par exemple attribuer à chaque station ou noeud du réseau une longueur d'onde particulière servant à porter les messages destinés à ce noeud. Chaque noeud relié à la liaison optique émettra un message à un noeud destinataire par modulation de la longueur d'onde associée à ce noeud destinataire. Et chaque noeud pourra recevoir un message par détection de sa longueur d'onde associée.

Cette solution présente cependant quelques inconvénients. Il est d'abord nécessaire que chaque noeud soit capable d'émettre chacune des longueurs d'onde des autres noeuds du réseau. Il faut par ailleurs prévenir ou résoudre les problèmes de collisions, c'est-à-dire les cas où plusieurs noeuds risquent d'émettre des messages ayant le même destinataire. Pour résoudre ce problème, on pourra par exemple prévoir une longueur d'onde supplémentaire portant un signal de synchronisation ainsi qu'une information relative à l'occupation de chacune des longueurs d'onde. Chaque noeud doit alors mettre en oeuvre un protocole d'accès qui tient compte de l'état d'occupation de la longueur d'onde du destinataire. Il en résulte une grande complexité de gestion de protocoles et une limitation du débit du réseau.

Le document de l'état de la technique EP-A-497 667 décrit une matrice de commutation pour contrôleur de réseau de transmission optique qui commute des données sous le forme de cellules de longueur fixe en attribuant une longueur d'onde à chaque cellule appliquée à l'entrée de la matrice et qui comprend une mémoire tampon, un étage d'aiguillage spatial et des sélecteurs de longueurs d'ondes en sortie.

Le document de l'état de la technique EP-A-621 700 décrit un réseau de transmission optique à multiplexage de longueurs d'ondes où chaque noeud décide sur la base d'une table et de l'adresse du destinataire s'il doit convertir la longueur d'onde du signal reçu, ou bien passer ou encore recevoir ce signal.

L'invention a pour but de résoudre les problèmes soulevés par la solution précédente.

Dans ce but, l'invention a pour objet un réseau de transmission d'informations par liaison optique et multiplexage de longueurs d'onde par échanges de messages entre des noeuds constituant au moins un sous-ensemble du réseau, lesdits messages étant contenus dans des intervalles de temps définis par un signal d'horloge (SP), chaque noeud comportant une entrée reliée à ladite liaison pour recevoir des messages par détection d'une longueur d'onde de réception spécifique, chaque noeud comportant une sortie reliée à ladite liaison lui permettant d'émettre des messages par modulation de longueur d'onde, ledit réseau étant caractérisé en ce que chaque noeud est prévu pour faire porter lesdits messages à émettre par une longueur d'onde d'émission spécifique et leur associer respectivement des étiquettes identifiant les noeuds destinataires des messages, en ce qu'un contrôleur de réseau relié à ladite liaison est prévu pour recevoir les messages et les étiquettes associées émis par chacun des noeuds et pour réémettre vers les entrées desdits noeuds lesdits messages reçus, lesdits messages réémis étant portés par des longueurs d'onde correspondant respectivement aux longueurs d'onde de réception des noeuds destinataires identifiés par les étiquettes respectivement associées auxdits messages, et en ce que la longueur d'onde d'émission de chaque noeud est différente des longueurs d'onde de réception des autres noeuds.

Compte tenu de la dissociation entre la longueur d'onde d'émission de chaque noeud et des longueurs d'onde de réception des autres noeuds, il n'existe au niveau des noeuds aucune contrainte liée aux problèmes de collisions. Il en résulte une grande simplification pour la réalisation des noeuds.

Concernant le choix des longueurs d'onde d'émission de réception, une solution particulièrement simple consiste à attribuer à chaque noeud une même longueur d'onde d'émission et de réception spécifique au noeud et différente de celles des autres noeuds.

Pour améliorer le débit du réseau, il est souhaitable que chaque noeud puisse émettre simultanément les messages et les étiquettes associées. Pour cela et selon un autre aspect de l'invention, chaque noeud est prévu pour émettre lesdites étiquettes par modulation d'une longueur d'onde de contrôle commune.

Selon un autre aspect de l'invention, le contrôleur des réseaux est prévu pour fournir auxdits noeuds ledit signal d'horloge porté par ladite longueur d'onde de contrôle et en ce que chaque étiquette a la forme d'une modulation portée par ladite longueur d'onde de contrôle à l'intérieur d'un desdits intervalles de temps, ladite modulation étant fonction du ou des noeuds destinataire(s) du message émis pendant ledit intervalle de temps.

Cette dernière disposition présente l'avantage que l'on peut véhiculer l'ensemble des informations de routage au moyen d'une seule longueur d'onde.

Selon encore un autre aspect de l'invention, lesdites modulations produites par lesdits noeuds sont contenus à l'intérieur de fenêtres temporelles disjointes associées respectivement auxdits noeuds. Ceci présente l'avantage qu'il n'est pas nécessaire de prévoir dans l'étiquette une information relative à l'identité de l'émetteur, c'est-à-dire de la longueur d'onde portant le message destiné au noeud identifié par l'étiquette.

L'invention a également pour objet un réseau de transmission dont les noeuds sont organisés en un ou plusieurs sous-ensembles ayant chacun une structure en anneau.

Enfin, l'invention a aussi pour objet une matrice de commutation, notamment, pour contrôleur de réseau de transmission d'informations par liaison optique et échanges de messages contenus dans des intervalles de temps définis par un signal d'horloge; ledit contrôleur étant prévu pour recevoir des messages multiplexés en longueurs d'onde d'émission et pour réémettre lesdits messages reçus, lesdits messages réémis étant portés par des longueurs d'onde de réception, ladite matrice étant caractérisée en ce qu'elle comporte :
- une mémoire tampon optique constitué de N étages de retard prévus pour stocker respectivement N multiplex successifs de messages reçus,
- un étage d'aiguillage spatial à N entrées et n sorties relié à ladite mémoire tampon et capable de relier sélectivement chaque étage de retard à au moins une de ses sorties,
- n sélecteurs de longueur d'onde ayant leurs entrées reliées respectivement aux sorties de l'étage d'aiguillage spatial et
- des convertisseurs de longueur d'onde ayant leurs entrées reliées respectivement aux sorties desdits sélecteurs.

D'autres aspects et avantages de l'invention apparaîtront dans la suite de la description en référence aux figures.
- la figure 1 représente schématiquement un réseau selon l'invention, dans le cas d'une structure en anneau.
- la figure 2 représente des chronogrammes permettant d'expliquer le fonctionnement du réseau selon l'invention.
- la figure 3 représente un exemple de réalisation des noeuds du réseau selon l'invention.
- la figure 4 représente un exemple de réalisation du contrôleur du réseau selon l'invention.
- la figure 5 représente un exemple de réalisation détaillée d'un sélecteur de longueur d'onde utilisé dans le schéma de la figure 4.
- la figure 6 représente schématiquement un autre réseau conforme à l'invention et constituée de plusieurs anneaux.
- la figure 7 représente un exemple de réalisation du contrôleur du réseau utilisé dans le réseau de la figure 6.

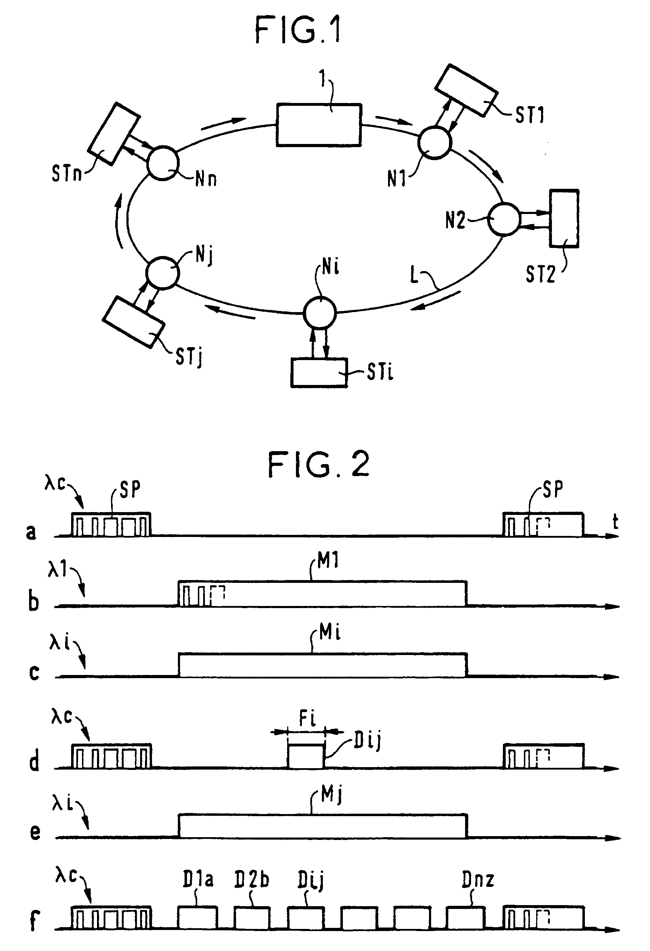

Le réseau représenté à la figure 1 comporte les noeuds N1, N2, Ni, Nj, Nn reliés entre eux par une liaison optique L et associés respectivement aux stations ST1, ST2, STi, STj, STn. Un contrôleur de réseau 1 a une sortie reliée à l'entrée du premier noeud N1 et une entrée reliée à la sortie du dernier noeud Nn. Chaque noeud intermédiaire Ni a son entrée et sa sortie reliées respectivement à la sortie et à l'entrée des noeuds respectivement amont N2 et aval Nj. Chacun des noeuds Ni est associé à une longueur d'onde de réception λi et à une longueur d'onde d'émission pouvant être égale à la longueur d'onde de réception λi.

Pour expliquer plus en détails le fonctionnement du réseau, il convient de se reporter aux chronogrammes a à f de la figure 2 qui représentent les modulations des différents signaux impliqués. Le signal émis par la sortie du contrôleur de réseau 1 est un multiplex des longueurs d'onde λ1, ..., λi, ..., λn des noeuds du réseau et de la longueur d'onde de contrôle λc. En sortie du contrôleur 1, la longueur d'onde de contrôle λc porte un signal d'horloge ayant la forme d'un motif de synchronisation SP modulant λc (chronogramme a). Pendant chaque intervalle de temps défini entre deux motifs de synchronisation successifs, les autres longueurs d'onde telles que λ1, λi portent des messages M1, Mi destinés respectivement aux noeuds N1, Ni (chronogrammes b et c).

Le multiplex issu du contrôleur 1 est ensuite reçu par le premier noeud N1 du réseau qui prend en compte le message M1 par détection de sa longueur d'onde de réception λ1. Si la station ST1 associée au noeud N1 a un message à émettre, elle l'insère au mutiplex reçu par une modulation correspondante de sa longueur d'onde d'émission qui peut être égale à sa longueur d'onde de réception. En parallèle, le noeud N1 insère sur la longueur d'onde de contrôle λc une étiquette représentative du ou des destinateurs du message émis. Le nouveau multiplex ainsi formé est alors transmis au noeud suivant N2 qui effectue les mêmes opérations. D'une façon générale, comme représenté sur les chronogrammes c, d et e, un noeud quelconque Ni du réseau reçoit de la même façon un multiplex porté par les longueurs d'onde λc, λ1, ..., λi,..., λn. Après détection du signal d'horloge SP porté par λc, le noeud Ni prend en compte l'éventuel message Mi qui lui est destiné par détection de sa longueur d'onde λi. Dans le cas où la station STi associée au noeud Ni a un message Mj destiné au noeud Nj, le noeud i fait porter ce message par sa longueur d'onde λi, ce message étant contenu dans un intervalle de temps compris entre deux signaux d'horloge portés par λc. Simultanément, le noeud Ni insère dans le même intervalle de temps l'étiquette Dij portée par λc. L'étiquette Dij est une modulation représentative du ou des destinataires du message Mj, cette modulation étant contenue à l'intérieur d'une fenêtre temporelle Fi réservée au noeud Ni et contenue dans chaque intervalle de temps considéré.

Ainsi, le contrôleur de réseau 1 recevra en entrée l'ensemble des messages Mj portés par les différentes longueurs d'onde λi des émetteurs de ces messages. De même, il recevra le signal de contrôle (chronogramme f) contenant les étiquettes D1a, D2b, Dij, Dnz représentatives des destinataires des messages émis respectivement par les noeuds N1, N2, Ni, Nn. En fonction de la position temporelle et du contenu de ces étiquettes, le contrôleur 1 pourra alors effectuer des conversions de longueurs d'onde pour faire porter les messages associés par la ou les longueurs d'onde des destinataires de ces messages.

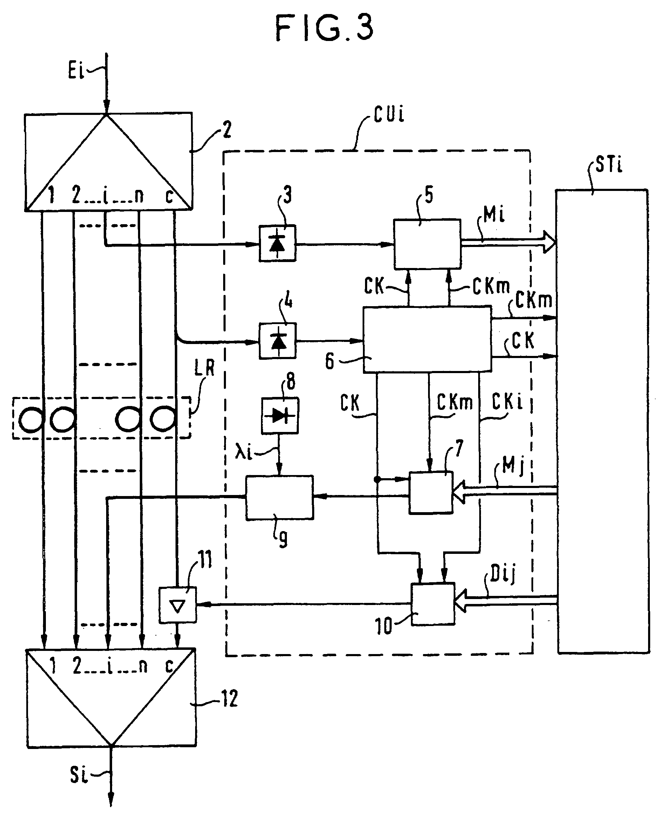

La figure 3 représente un exemple de réalisation d'un des noeuds Ni du réseau. Le noeud Ni comporte des moyens d'extraction et d'insertion de longueurs d'onde constitués d'un démultiplexeur 2 et d'un multiplexeur 12. L'entrée Ei du démultiplexeur 2 qui constitue l'entrée du noeud est reliée à la sortie du noeud amont par l'intermédiaire de la liaison optique L. Il fournit sur ses sorties les différentes longueurs d'onde du multiplex reçu sur l'entrée Ei. Les sorties du démultiplexeur 2 sont reliées par des liaisons optiques aux entrées correspondantes du multiplexeur 12, à l'exception de la sortie i correspondant à la longueur d'onde λi du noeud Ni. Cette sortie i est par contre reliée à une première entrée d'une unité de contrôle CUi du noeud Ni. La sortie c qui correspond à la longueur d'onde de contrôle λc est d'autre part reliée à une seconde entrée de l'unité de contrôle CUi. La première entrée de l'unité de contrôle CUi est l'entrée d'un détecteur 3 accordé sur la longueur d'onde λi du noeud Ni. Le détecteur 3 fournit en sortie un signal électrique qui est transmis à un décodeur 5 prévu pour former le message reçu Mi destiné à la station associée STi. De même, la seconde entrée de l'unité CUi correspond à l'entrée d'un second détecteur 4 accordé sur la longueur d'onde contrôle λc. Le signal électrique fourni par le détecteur 4 est reçu par un circuit de synchronisation 6 conçu pour reconnaître les motifs de synchronisation SP véhiculés par λc et pour générer un signal de synchronisation CKm correspondant. Le circuit 6 effectue également la récupération d'un signal d'horloge primaire CK à l'aide du rythme de modulation du motif SP. Les signaux CKm et CK servent de signaux de synchronisation et d'horloge pour le décodeur 5. Le circuit 6 fournit enfin un signal de synchronisation de fenêtre CKi.

L'unité CUi comporte d'autre part un circuit d'émission de messages 7 synchronisé par les signaux CKm et CK et qui délivre un signal de commande de modulation fonction des messages Mj fournis par la station STi. Le circuit 7 commande un modulateur 9 qui reçoit l'onde d'une source laser accordée à la longueur d'onde λi. Sa sortie est reliée à l'entrée i du multiplexeur 12.

L'unité CUi comporte enfin un circuit de commande d'émission d'étiquettes 10 synchronisé par les signaux CK et CKi, fournissant un signal de commande de modulation fonction de l'adresse Dij du ou des destinataires du message Mj à émettre. Le signal de commande de modulation est appliqué à un modulateur 11 inséré dans la liaison reliant la sortie c du démultiplexeur 2 à l'entrée correspondante du multiplexeur 12. Les liaisons optiques entre les sorties du démultiplexeur 2 et les entrées du multiplexeur 12 sont munies de lignes à retard optiques calibrées LR.

En variante, on pourra prévoir que le noeud Ni possède plusieurs longueurs d'onde de réception et d'émission. Il suffira alors de prévoir plusieurs détecteurs 3, plusieurs circuits d'émission 7 et plusieurs modulateurs 9.

Le noeud représenté à la figure 3 fonctionne de la façon suivante. La réception par l'intermédiaire du détecteur 4 d'un motif de synchronisation décodé par le circuit 6 permet à ce dernier de générer le signal d'horloge primaire CK et le signal de synchronisation CKm. Ces signaux permettent au décodeur 5 de décoder le message porté par la longueur d'onde λi et de le transmettre à la station STi. Si un message Mj doit être émis à l'adresse Dij, le circuit 7 provoque une modulation correspondant au message sur l'entrée i du multiplexeur 12 au moyen du modulateur 9 et de la source 8. Parallèlement, le circuit 10 provoque une modulation correspondant à l'adresse Dij de la longueur d'onde λc grâce au modulateur 11. Cette modulation est placée à l'intérieur de la fenêtre attribuée au noeud considéré grâce au signal CKi.

Les lignes à retard LR sont dimensionnées de façon à compenser le temps de réponse des circuits électroniques de l'unité de contrôle CUi.

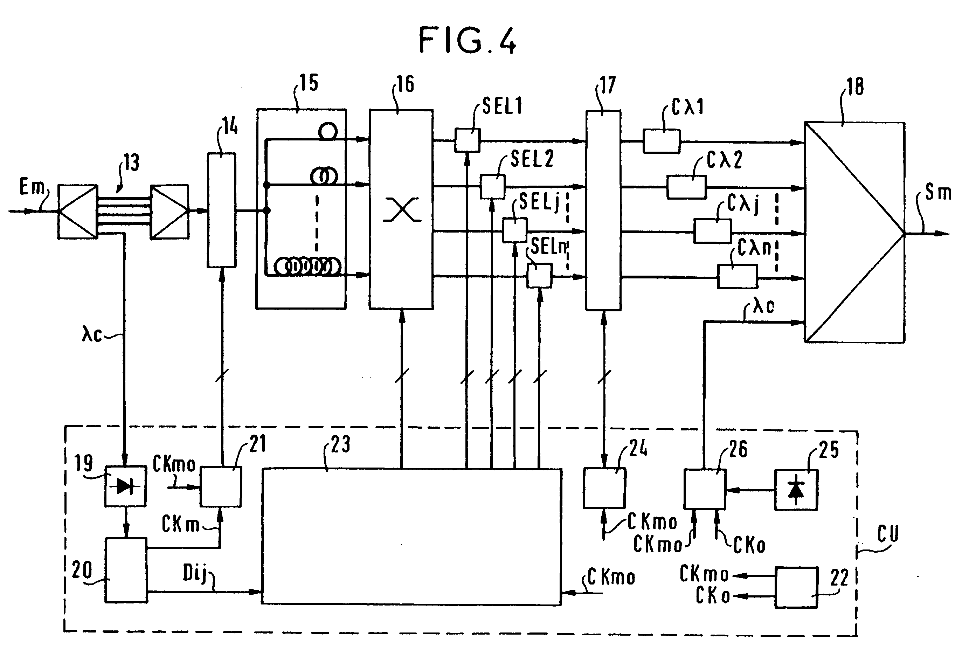

La figure 4 représente un mode de réalisation du contrôleur de réseau 1. Le contrôleur 1 comporte un extracteur de longueur d'onde 13 dont l'entrée constitue l'entrée Em du contrôleur. L'extracteur 13 fournit d'une part la longueur d'onde de contrôle λc à une unité de commande CU et d'autre part les autres longueurs d'onde du multiplex reçu à un premier étage de retard réglable. La sortie de l'étage 14 est reliée à une matrice de commutation spatio-temporelle constituée notamment d'une mémoire tampon optique 15 et d'un étage d'aiguillage spatial 16. La mémoire tampon 16 est constituée de N lignes à retard optiques procurant des temps de propagation qui sont des multiples successifs de l'intervalle de temps séparant deux motifs de synchronisation successifs. L'étage 16 comporte un nombre n de sorties égal au nombre de longueurs d'onde de réception. Chacune de ses sorties est reliée à l'entrée d'un sélecteur de longueurs d'onde SEL1, SEL2, SELj, SELn dont les sorties sont reliées aux entrées d'un multiplexeur 18 par l'intermédiaire d'un second étage de retard réglable 17 et de convertisseurs de longueurs d'onde Cλ1, Cλ2, Cλj, Cλn. La sortie du multiplexeur 18 constitue la sortie Sm du contrôleur de réseau. Le multiplexeur 18 comporte une entrée supplémentaire reliée à l'unité de contrôle CU pour insérer le signal de contrôle porté par λc.

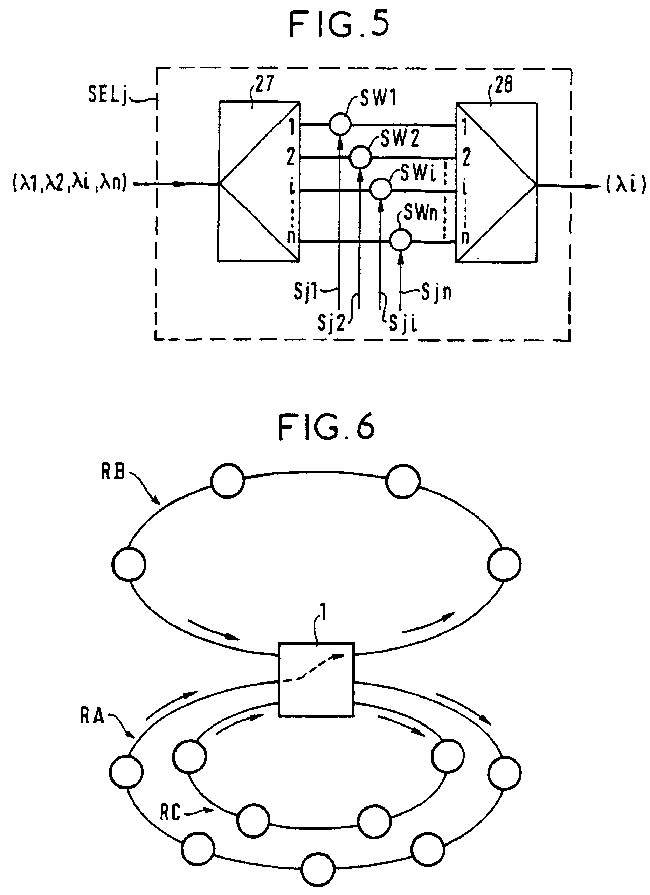

L'extracteur de longueurs d'onde 13 peut être réalisé au moyen d'un démultiplexeur dont la sortie correspondant à la longueur d'onde de contrôle λc est relié à l'unité CU et dont les autres sorties sont reliées aux entrées d'un multiplexeur. Le premier étage de retard peut être réalisé au moyen d'un ensemble de lignes à retard constitué de segments de fibre optique de longueur différente associées à des moyens d'aiguillage commandés par l'unité CU. Les sélecteurs de longueurs d'onde, tels que SELj peuvent être réalisés conformément au schéma de la figure 5. Le sélecteur SELj comporte un démultiplexeur 27 dont l'entrée reçoit le multiplex λ1, λ2, λi, λn et dont les sorties sont reliées aux entrées correspondantes d'un multiplexeur 28 par l'intermédiaire de liaisons optiques et d'interrupteurs optiques SW1, SW2, SWi, SWn. Les interrupteurs SW1-SWn sont commandés par des signaux de commande électrique Sj1-Sjn fournis par l'unité CU.

L'unité de commande CU comporte un détecteur 19 sensible à la longueur d'onde λc fournie par l'extracteur 13. La sortie du détecteur 19 est reliée à un décodeur d'entrée 20 prévu pour récupérer le signal de synchronisation CKm et effectuer le décodage des étiquettes successives Dij portées par λc. Le signal de synchronisation CKm est reçu par un circuit de resynchronisation primaire 21 qui commande le premier étage de retard réglable 14 en fonction du déphasage entre le signal de synchronisation récupéré CKm et un signal de synchronisation de référence CKm0 fourni par un circuit d'horloge 22. Les étiquettes décodées par le décodeur 20 sont fournies à une unité de traitement 23 prévue pour commander l'étage d'aiguillage 16 et les sélecteurs de longueurs d'onde SELj. L'unité de traitement 23 est réalisée au moyen d'un système à microcontrôleur programmé pour exécuter un algorithme de sélection. L'algorithme est notamment conçu pour établir les correspondances entre les longueurs d'onde des destinataires des messages et les longueurs d'onde portant ces messages à l'entrée du contrôleur de réseau. L'algorithme de sélection est également prévu pour gérer les conflits, c'est-à-dire les cas où, dans un même intervalle de temps, plusieurs messages portés par des longueurs d'onde différentes ont un même destinataire. Grâce à des circuits d'interfaces appropriés non représentés, l'unité de traitement commande l'étage 16 et les sélecteurs SELj.

Une entrée du multiplexeur 18 est reliée à la sortie d'un générateur de motifs de synchronisation 26, relié à une source 25 de longueur d'onde λc et synchronisée par le signal de synchronisation CKm0 et un signal d'horloge primaire CK0 fournis par le circuit d'horloge 22. On prévoira enfin un circuit de resynchronisation secondaire 24 pour commander le second étage de retard 17.

Les premier et second étages de retard 14 et 17 pourraient être réalisés selon les enseignements du compte rendu de la conférence PHOTONICS IN SWITCHING, Salt Lake City, mars 1995, "An Optical Cell synchronizer for Packet Switched Nodes", M. BUZIO ET AL, pages 64 à 66.

Le contrôleur de réseau représenté à la figure 4 fonctionne de la façon suivante. La longueur d'onde de contrôle λc extraite de l'extracteur 13 et détectée par le détecteur 19 permet au décodeur d'entrée 20 de produire le signal de synchronisation CKm ainsi que les étiquettes de destinataire. Le signal CKm est utilisé par le circuit de resynchronisation primaire 21 pour commander le retard appliqué par l'étage 14 en vue de minimiser l'écart de phase entre le signal CKm et le signal de synchronisation de référence CKm0. L'unité de traitement 23 recevant les étiquettes Dij détermine en fonction de la position de chaque étiquette dans l'intervalle de temps la longueur d'onde de l'émetteur et la conversion de longueur d'onde à effectuer pour faire porter en sortie le message correspondant par la longueur d'onde associée au destinataire du message identifié par l'étiquette. En fonction des conversions à effectuer et des conflits détectés, l'unité de traitement commande l'étage d'aiguillage 16 pour établir les interconnexions appropriées entre les sorties de la mémoire tampon 15 et les entrées des sélecteurs de longueur d'onde SELj. En parallèle, l'unité 23 commande les interrupteurs SWi de chacun des sélecteurs de longueur d'onde SELj de sorte que chaque sélecteur de longueur d'onde SELj associé au noeud destinataire Nj fournisse en sortie la longueur d'onde λi associée à l'émetteur du message. Après une éventuelle resynchronisation secondaire par l'étage 17, chaque longueur d'onde λi d'émetteur est convertie en une longueur d'onde de récepteur λj par le convertisseur de longueur d'onde Cλj associé au sélecteur SELj. Le multiplexeur 18 fournit alors en sortie un nouveau multiplex des longueurs d'onde des noeuds destinataires et de la longueur d'onde du signal de contrôle λc.

Il est à noter que la structure de la matrice de commutation composée de la mémoire 15, de l'étage 16, des sélecteurs SELj et des convertisseurs Cλj rend possible la diffusion de messages, c'est-à-dire l'émission d'un même message porté par plusieurs longueurs d'ondes différentes.

La figure 6 représente un réseau conforme à l'invention et constitué de plusieurs anneaux RA, RB, RC associés à un contrôleur de réseau commun. Chaque noeud du réseau a une constitution analogue à celle décrite à la figure 3. Il conviendra toutefois de prévoir au niveau du circuit de commande d'émission d'étiquettes la possibilité d'indiquer le numéro de l'anneau auquel appartient le noeud destinataire de chaque message. Cette particularité sera également prise en compte par l'algorithme de sélection exécuté par l'unité de traitement 23 du contrôleur de réseau 1.

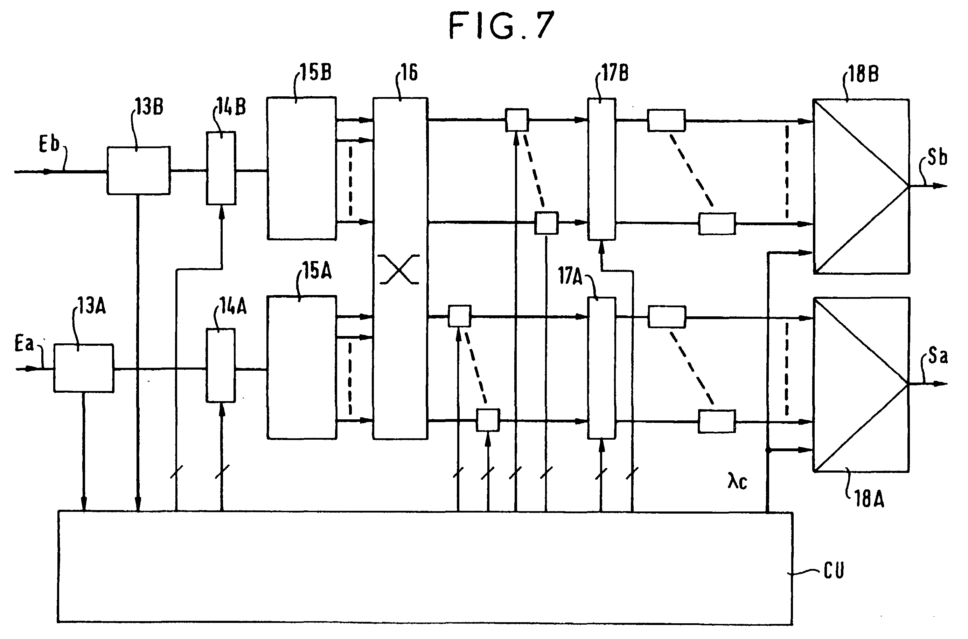

A titre d'illustration, la figure 7 représente la structure d'un contrôleur 1 dans le cas particulier où le réseau comporte deux anneaux RA et RB. De façon analogue à la réalisation de la figure 4, chaque anneau est associé à un extracteur de longueurs d'onde 13A, 13B, à un premier étage de retard réglable 14A, 14B, à une mémoire tampon 15A, 15B, à l'étage d'aiguillage 16, à des sélecteurs, à des étages de retard secondaire 17A, 17B, à des convertisseurs de longueurs d'onde et à des multiplexeurs 18A, 18B dont les sorties Sa, Sb sont reliées respectivement aux anneaux RA, RB.

Le fonctionnement du contrôleur de la figure 7 est analogue à celui de la figure 4 à la différence près que l'étage d'aiguillage 16 peut être commandé de façon à transférer des messages issus de noeuds appartenant à un des anneaux vers un noeud destinataire appartenant à l'autre anneau.

D'une façon générale, le contrôleur 1 pourra être adapté pour gérer un nombre quelconque d'anneaux en prévoyant les étages correspondants nécessaires.

## Revendications

1. Réseau de transmission d'informations par liaison optique (L) et multiplexage de longueurs d'onde (λi) par échanges de messages (Mi, Mj) entre des noeuds (Ni, Nj) constituant au moins un sous-ensemble du réseau, lesdits messages étant contenus dans des intervalles de temps définis par un signal d'horloge (SP), chaque noeud (Ni) comportant une entrée (Ei) reliée à ladite liaison (L) pour recevoir des messages (Mi) par détection d'au moins une longueur d'onde de réception spécifique (λi), chaque noeud comportant une sortie (Si) reliée à ladite liaison (L) lui permettant d'émettre des messages (Mj) par modulation de longueur d'onde, ledit réseau étant **caractérisé en ce que** chaque noeud (Ni) est prévu pour faire porter lesdits messages (Mj) à émettre par une longueur d'onde d'émission spécifique (λi) et leur associer respectivement des étiquettes (Dij) identifiant les noeuds destinataires (Nj) des messages (Mj), **en ce qu'**un contrôleur de réseau (1) relié à ladite liaison (L) est prévu pour recevoir les messages (Mj) et les étiquettes associées (Dij) émis par chacun des noeuds (Ni) et pour réemettre vers les entrées desdits noeuds (Nj) lesdits messages reçus (Mj), lesdits messages réémis étant portés par des longueurs d'onde correspondant respectivement aux longueurs d'onde de réception (λj) des noeuds destinataires (Nj) identifiés par les étiquettes (Dij) respectivement associées auxdits messages (Mj), et **en ce que** la longueur d'onde d'émission de chaque noeud est différente des longueurs d'onde de réception des autres noeuds.

2. Réseau de transmission selon la revendication 1, **caractérisé en ce que** les longueurs d'onde d'émission et de réception d'un même noeud sont égales.

3. Réseau de transmission selon l'une des revendications 1 ou 2, **caractérisé en ce que** lesdits noeuds (Ni, Nj) sont prévus pour émettre lesdites étiquettes (Dij) par modulation d'une longueur d'onde de contrôle (λc) commune.

4. Réseau de transmission selon la revendication 3, **caractérisé en ce que** ledit contrôleur de réseau (1) est prévu pour fournir auxdits noeuds (Ni, Nj) ledit signal d'horloge (SP) porté par ladite longueur d'onde de contrôle (λc) et **en ce que** chaque étiquette a la forme d'une modulation portée par ladite longueur d'onde de contrôle (λc) à l'intérieur d'un desdits intervalles de temps, ladite modulation étant fonction du ou des noeuds destinataire(s) du message émis pendant ledit intervalle de temps.

5. Réseau de transmission selon la revendication 4, **caractérisé en ce que** lesdites modulations produites par lesdits noeuds (Ni) sont contenus à l'intérieur de fenêtres temporelles disjointes (Fi) associées respectivement auxdits noeuds.

6. Réseau de transmission selon l'une des revendications 1 à 5, **caractérisé en ce que** chaque sous-ensemble de noeuds du réseau a une structure en anneau selon laquelle le contrôleur de réseau (1) a une sortie (Sm) reliée à l'entrée d'un premier noeud (N1) de l'anneau et une entrée (Em) reliée à la sortie du dernier noeud (Nn) de l'anneau, chaque noeud intermédiaire (Ni) ayant son entrée et sa sortie reliées respectivement à la sortie et à l'entrée des noeuds placés respectivement en amont et en aval.

7. Réseau de transmission selon la revendication 6, **caractérisé en ce qu'**il comporte une pluralité de sous-ensembles de noeuds (RA, RB, RC) ayant chacun une structure en anneau et **en ce que** l'étiquette (Dij) associée à un message (Mj) comporte l'indication de l'anneau auquel appartient chaque noeud destinataire (Dj) dudit message (Mj).

8. Matrice de commutation pour contrôleur de réseau de transmission d'informations par liaison optique (L) et échanges de messages (Mi, Mj) contenus dans des intervalles de temps définis par un signal d'horloge (SP); ledit contrôleur étant prévu pour recevoir des messages (Mj) multiplexés en longueurs d'onde d'émission (λi) et pour réémettre lesdits messages reçus, lesdits messages réémis (Mj) étant portés par des longueurs d'onde de réception (λj), ladite matrice étant **caractérisée en ce qu'**elle comporte :
- une mémoire tampon optique (15, 15A, 15B) constitué de N étages de retard prévus pour stocker respectivement N multiplex successifs de messages reçus,
- un étage d'aiguillage spatial (16) à N entrées et n sorties relié à ladite mémoire tampon (15, 15A, 15B) et capable de relier sélectivement chaque étage de retard à au moins une de ses sorties,
- n sélecteurs de longueur d'onde (SEL1-SELn) ayant leurs entrées reliées respectivement aux sorties de l'étage d'aiguillage spatial (16) et
- des convertisseurs de longueur d'onde (Cλ1-Cλn) ayant leurs entrées reliées respectivement aux sorties desdits sélecteurs (SEL1-SELn).

9. Matrice de commutation selon la revendication 8, **caractérisé en ce que** lesdits étages de retard sont des lignes à retard optiques procurant des temps de propagation multiples dudit intervalle de temps.

## Patentansprüche

1. Netz zur Übertragung von Informationen über optische Verbindungen (L) mittels Multiplexen von Wellenlängen (λi) durch Austausch von Mitteilungen (Mi, Mj) zwischen Knoten (Ni, Nj), die mindestens eine Untergruppe des Netzes bilden, wobei besagte Mitteilungen in Zeitintervallen enthalten sind, die durch ein Taktsignal (SP) festgelegt sind, wobei jeder Knoten (Ni) einen mit besagter Verbindung (L) gekoppelten Eingang (Ei) zum Empfang der Mitteilungen (Mi) durch Detektion mindestens einer bestimmten Empfangswellenlänge (λi) beinhaltet, wobei jeder Knoten einen mit besagter Verbindung (L) gekoppelten Ausgang (Si) beinhaltet, über welchen er durch Wellenlängenmodulation Mitteilungen (Mj) aussenden kann, wobei besagtes Netz **dadurch gekennzeichnet ist, daß** jeder Knoten (Ni) dafür vorgesehen ist, besagte zu sendende Mitteilungen (Mi) über eine bestimmte Wellenlänge (λi) zu transportieren und ihnen jeweils Labels (Dij) zur Identifikation der Zielknoten (Nj) für die Mitteilungen (Mj) zuzuordnen, ferner dadurch, daß ein mit der Verbindung (L) gekoppelter Netzcontroller (1) dafür vorgesehen ist, die Mitteilungen (Mj) sowie die von den einzelnen Knoten (Ni) zugeordneten ausgesendeten Labels (Dij) zu empfangen und besagte empfangene Mitteilungen (Mj) wieder an besagte Knoten (Mj) zu senden, wobei besagte wieder gesendete Mitteilungen von Wellenlängen transportiert werden, die jeweils den Empfangswellenlängen (λj) der Zielknoten (Nj) entsprechen, welche durch die den besagten Mitteilungen (Mj) zugeordneten Labels (Dij) identifiziert werden, sowie dadurch, daß sich die Sendewellenlänge jedes Knotens von den Empfangswellenlängen der übrigen Knoten unterscheidet.

2. Übertragungsnetz gemäß Anspruch 1, **dadurch gekennzeichnet, daß** die Sendewellenlänge und die Empfangswellenlänge ein und desselben Knotens gleich sind.

3. Übertragungsnetz gemäß einem oder beiden der Ansprüche 1 und 2, **dadurch gekennzeichnet, daß** besagte Knoten (Ni, Nj) dafür vorgesehen sind, besagte Labels (Dij) durch Modulation einer gemeinsamen Steuerwellenlänge (λc) zu versenden.

4. Übertragungsnetz gemäß Anspruch 3, **dadurch gekennzeichnet, daß** besagter Netzcontroller (1) dafür vorgesehen ist, an besagte Knoten (Ni, Nj) besagtes Taktsignal (SP) zu liefern, welches von besagter Steuerwellenlänge (λc) transportiert wird, sowie dadurch, daß jedes Label die Form einer Modulation hat, die von besagter Steuerwellenlänge (λc) innerhalb eines der besagten Zeitintervalle transportiert wird, wobei besagte Modulation von dem oder den Zielknoten für die während des besagten Zeitintervalls ausgesendeten Mitteilung abhängig ist.

5. Übertragungsnetz gemäß Anspruch 4, **dadurch gekennzeichnet, daß** besagte Modulationen, die durch besagte Knoten (Ni) erzeugt werden, in voneinander getrennten Zeitfenstern (Fi) enthalten sind, welche besagten jeweiligen Knoten zugeordnet sind.

6. Übertragungsnetz gemäß einem oder mehreren der Ansprüche 1 bis 5, **dadurch gekennzeichnet, daß** jede Knoten-Untergruppe des Netzes eine Ringstruktur aufweist, gemäß derer der Netzcontroller (1) einen mit dem Eingang eines ersten Knotens (N1) gekoppelten Ausgang (Sm) sowie einen mit dem Ausgang des letzten Knotens (Nn) gekoppelten Eingang (Em) besitzt, wobei der Eingang und der Ausgang eines jeden dazwischen liegenden Knotens (Ni) jeweils mit dem Ausgang und dem Eingang der jeweils in der Signalfolge davor und dahinter angeordneten Knoten gekoppelt sind.

7. Übertragungsnetz gemäß Anspruch 6, **dadurch gekennzeichnet, daß** dieses mehrere Untergruppen von Knoten (RA, RB, RC) beinhaltet, die jeweils eine Ringstruktur aufweisen, sowie dadurch, daß das einer Mitteilung (Mj) zugeordnete Label (Dij) eine Angabe darüber enthält, zu welchem Ring jeder der Zielknoten (Dj) für besagte Mitteilung (Mj) gehört.

8. Schaltmatrix als Controller für ein Netz zur Übertragung von Informationen über eine optische Verbindung (L) sowie zum Austausch von Mitteilungen (Mi, Mj), welche in Zeitintervallen enthalten sind, die durch ein Taktsignal (SP) definiert sind, wobei besagter Controller dafür vorgesehen ist, Mitteilungen (Mj) zu empfangen und besagte Mitteilungen erneut zu senden, wobei besagte erneut gesendete Mitteilungen (Mj) von Empfangswellenlängen λi transportiert werden, ferner dadurch, daß sie
- einen optischen Pufferspeicher (15, 15A, 15B), bestehend aus N Verzögerungsstufen, die dafür vorgesehen sind, jeweils N aufeinanderfolgende Multiplexsignale der empfangenen Mitteilungen zu speichern,
- eine räumliche Verzweigungsstufe (16) mit N Eingängen und n Ausgängen, welche mit besagtem Pufferspeicher (15, 15A, 15B) gekoppelt und in der Lage sind, jede einzelne Verzögerungsstufe selektiv mit mindestens einem ihrer Ausgänge zu koppeln,
- n Wellenlängenselektoren (SEL1-SELj), deren Eingänge jeweils mit den Ausgängen der räumlichen Verzweigungsstufe (16) gekoppelt sind, und
- Wellenlängenkonverter (Cλ1-Cλn), deren Eingänge jeweils mit den Ausgängen besagter Selektoren (SEL1-SELj) gekoppelt sind, beinhaltet.

9. Schaltmatrix gemäß Anspruch 8, **dadurch gekennzeichnet, daß** besagte Verzögerungsstufen optische Verzögerungsleitungen sind, die Verzögerungszeiten bewirken, welche aufeinanderfolgende Vielfache des besagten Zeitintervalls sind.

## Claims

1. A data communication network using optical links (L) and wavelength multiplexing (λi) to exchange messages (Mi, Mj) between nodes (Ni, Nj) constituting at least one subset of the network, said messages being contained in time intervals defined by a clock signal (SP), each node (Ni) having an input (Ei) connected to said link (L) to receive messages (Mi) by detecting at least one specific receive wavelength (λi), each node having an output (Si) connected to said link (L) enabling it to send messages (Mj) by wavelength modulation, said network being **characterized in that** each node (Ni) is adapted to have said messages (Mj) to be sent conveyed by a specific send wavelength (λi) and to associate therewith respective labels (Dij) identifying the destination nodes (Nj) of the messages (Mj), **in that** a network controller (1) connected to said link (L) is adapted to receive the messages (Mj) and the associated labels (Dij) sent by each of the nodes (Ni) and to forward said messages (Mi) received to the inputs of said nodes (Ni), said forwarded messages being conveyed by wavelengths respectively corresponding to the receive wavelengths (λj) of the destination nodes (Nj) identified by the labels (Dij) respectively associated with said messages (Mj), and **in that** the send wavelength of each node is different from the receive wavelengths of the other nodes.

2. A network according to claim 1 **characterized in that** the send wavelength and the receive wavelength of the same node are equal.

3. A network according to claim 1 or claim 2 **characterized in that** said nodes (Ni, Ni) are adapted to send said labels (Dij) by modulating a common control wavelength (λc).

4. A network according to claim 3 **characterized in that** said network controller (1) is adapted to supply to said nodes (Ni, Nj) said clock signal (SP) conveyed by said control wavelength (λc), and **in that** each label is in the form of a modulation conveyed by said control wavelength (λc) within one of said time intervals, said modulation being dependent on the destination node(s) of the message sent during said time interval.

5. A network according to claim 4 **characterized in that** said modulations produced by said nodes (Ni) are contained within respective non-contiguous time windows (Fi) associated with said nodes.

6. A network according to any one of claims 1 to 5 **characterized in that** each subset of nodes of the network has a ring structure according to which the network controller (I) has an output (Sm) connected to the input of a first node (N1) of the ring and an input (Em) connected to the output of the last node (Nn) of the ring, each intermediate node (Ni) having its input and its output respectively connected to the output of the node on its upstream side and to the input of the node on its downstream side.

7. A network according to claim 6 **characterized in that** it comprises a plurality of subsets of nodes (RA, RB, RC) each having a ring structure and **in that** the label (Dij) associated with a message (Mj) includes an indication of the ring to which each destination node (Dj) of said message (Mj) belongs.

8. A switching matrix for use in a controller for a data communication network using optical links (L) and exchanging messages (Mi, Mj) contained in time intervals defined by a clock signal (SP), said controller being adapted to receive and to forward wavelength multiplexed send (λi) messages (Mj), said forwarded messages (Mi) being conveyed by receive wavelengths (λj), said matrix being **characterized in that** it includes:
- an optical buffer memory (15, 15A, 15B) comprising N time-delay stages adapted to store N respective successive received message multiplexes,
- a space switching stage (16) having N inputs and n outputs connected to said buffer memory (15, 15A, 15B) and adapted to connect each time-delay stage selectively to at least one of its outputs,
- n wavelength selectors (SEL1-SELn) having inputs connected to respective outputs of the space switching stage (16), and
- wavelength converters (Cλ1-Cλn) having inputs connected to respective outputs of said selectors (SEL1-SELn).

9. A switching matrix according to claim 8 **characterized in that** said time-delay stages are optical delay lines procuring propagation times that are multiples of said time interval.
